Europäisches Patentamt

(19) European Patent Office

Office européen des brevets

(11) Publication number : 0 653 707 A2

(12) **EUROPEAN PATENT APPLICATION**

(21) Application number : 94308479.8

(22) Date of filing : 16.11.94

(51) Int. Cl.⁶ : G06F 11/10

(30) Priority : 17.11.93 US 154192

(43) Date of publication of application :
17.05.95 Bulletin 95/20

(84) Designated Contracting States :
DE FR GB

(71) Applicant : International Business Machines
Corporation
Old Orchard Road
Armonk, N.Y. 10504 (US)

(72) Inventor : Fuoco, Daniel P.
21570 Red Bay Road
Boca Raton, Florida 35433 (US)
Inventor : Herring, Christopher M.
11 Mason Drive
Essex Junction, Vermont 05452 (US)
Inventor : Kellogg, Mark W.
29 Corduroy Road
Essex Junction, Vermont 05452 (US)
Inventor : Lenta, Jorge E.
5499 Fox Hollow Drive
Boca Raton, Florida 33486 (US)

(74) Representative : Litherland, David Peter
IBM United Kingdom Limited
Intellectual Property Department
Hursley Park
Winchester, Hampshire SO21 2JN (GB)

(54) Error handling in memory subsystem.

(57) A computer system includes a CPU, a bus, and add-on memory. The CPU has parity generation and detection capabilities but does not necessarily have error correction capabilities. Error correction capabilities are provided in the add-on memory or in association with the add-on memory which allows error correction of single bit read errors from the add-on memory and also allows for the detection of multiple bit read errors and the detection of write errors by byte location of the write errors.

EP 0 653 707 A2

Fig.2

EP 0 653 707 A2

This invention relates generally to the handling of errors in data being transferred to and from a memory subsystem in a computer system.

In the field of personal computers there are a variety of CPU systems which can "write to" and "read from" both system memory and add-on memory. Included within this variety of systems are systems that have various degrees of sophistication vis-a-vis parity checking and error correction codes. In the simplest of systems the CPU may merely read and write data without any parity checks or without any error correction code. However, it is normal that the CPU or its associated components have at least the capability of writing parity bits with each byte of code during the write cycle and the system be equipped either within the CPU or with an additional component the ability to do parity checks on data which is read from the add-on memory. In this type of system if an error occurs during the write cycle wherein there is either an incorrect data bit or an incorrect parity bit, this information is stored in its incorrect form; then when it is read back by the CPU on a read cycle, the associated parity checking logic will flag an error. Further, with this type of system no error correction is included, all that can be done is identify the byte in which the data error occurred.

Moving up the scale of sophistication, some CPU's or the components associated therewith have relatively sophisticated error correcting codes (ECC) and these can perform the necessary function of checking for write errors and detecting and correcting read errors.

The present invention seeks to improve on previous systems and accordingly provides in a first aspect, a memory subsystem for a computer system having a central processing unit (CPU) to which said memory is interconnectable via a system bus said system being configured to write data to and read data from said add-on memory as a plurality of data bytes constituting data words, and to generate parity bits associated with each of said bytes of data the CPU writes to add-on memory and to read parity bits associated with data the CPU reads from the add-on memory and to regenerate new parity bits and compare said new parity bits with said received parity bits to detect data errors on data read from the add-on memory, the memory comprising: error correcting code logic to identify any byte having a single bit error in the data or its parity bit received from the CPU, and to correct all single bit errors on data read from the add-on memory for transfer to the CPU; said error correcting code logic including: logic to generate parity bits from the data bytes received from said CPU and logic to compare the parity bits received from the CPU with said generated parity bits; logic to store said data bytes in a first format in said add-on memory when each newly generated parity bit compares with each corresponding originally written parity bit and in a second format when at least one newly generated parity bit does not compare with a corresponding originally written parity bit; logic to correct any single bit error in a data word when the data is read out of the memory for transfer to the CPU when the data bytes are stored in said first format; logic to identify any byte on which the corresponding parity bits did not compare when the data bytes are read from memory when the data bytes are stored in said second format; whereby single bit write errors to add-on memory are identified and single bit read errors from add-on memory are corrected.

In a second aspect there is provided a method for performing error correction in an add-on memory subsystem for a computer system having a CPU complex, and a bus for interconnecting said CPU complex and said add-on memory, and wherein said CPU complex is configured to write data to and read data from said add-on memory as a plurality of data bytes constituting data words, and wherein said CPU complex is configured to generate parity bits associated with each byte of data it writes to add-on memory and read parity bits associated with each byte of data it reads from add-on memory, said add-on memory including error correcting code to identify the location by byte of errors in data to be written to said memory and correct at least all single bit errors in data read from said memory; the method comprising the steps of: generating parity bits for each byte of data written by said CPU complex to said add-on memory; comparing the parity bits generated by the CPU complex with the parity bits generated by said error correcting code; generating a first condition flag if all parity bits compare and a second condition flag if one or more parity bits do not compare; generating check bits from said data written by the CPU complex; storing said written data and said generated check bits in either said first or said second condition in said add-on memory; reading the data from add-on memory to the CPU means checking and correcting the read value of any single bit error in a data word when said data is stored in said first condition, and identifying the byte location in which any errors were detected in the written data when said data is stored in said second condition.

Thus in a preferred arrangement, the CPU or associated components are configured to "write" data to and "read" data from the add-on memory as a plurality of data bytes constituting data words. The system is further configured either within the CPU or as a separate function to generate parity bits associated with each of the bytes of data the CPU writes to the add-on memory and to read parity bits associated with data the CPU reads from the add-on memory and to regenerate new parity bits and compare the newly generated parity bits with the original parity bits to detect data errors on data read from the add-on memory.

The add-on memory has error correcting code logic to identify any byte having a single bit error in the data bits or the parity bits written by the CPU to the add-on memory and to correct all the single bit errors on

2

data read from the add-on memory to the CPU. The error correcting code logic includes logic to generate parity bits from the data bytes written by the CPU to the add-on memory and logic to compare the parity bits written by the CPU with those generated by the error correcting code logic.

The data bytes are stored in a first format in the add-on memory when each newly generated parity bit compares with each corresponding originally written parity bit and in a second format when at least one newly generated parity bit does not compare with a corresponding originally written parity bit. These first and second formats can be preferably accomplished by using one of the bits in the transmission as a flag to indicate the format in which the stored data is being stored when an additional unused bit is available. However, some other flag devices such as drawing a certain line "high" or "low" can be used.

The logic also includes logic to correct any single bit error in the data words upon data being read out of the memory to the CPU when the data bytes are stored in the first format, and logic to identify any byte or bytes on which the corresponding parity bit does not compare when the data bytes are read from memory when the data bytes are stored in the second format. Thus, write errors to add-on memory in any data byte are identified, and single bit read errors from add-on memory are corrected. The logic also preferably includes logic circuits to identify all errors in two bits and some errors in more than two bits on the read cycle from the add-on memory.

It will therefore be appreciated that an add-on memory system of the present invention includes an improved error correction to allow operation of the card within a less sophisticated operating system in which only parity generation and detection is present. It will be further appreciated that cost-effectiveness is achieved when only critical add-on memory functions have ECC with the less critical functions being only parity checking. It is further desirable that a single type of card be used in both the less sophisticated systems with only parity checking as well as more sophisticated systems which include, internal to the system, error correction code. Thus is provided a single add-on card which is suitable in systems of varying sophistication vis-a-vis detecting parity as well as error correcting code logic.

A preferred embodiment of the invention will now be described, by way of example only, with reference to the accompanying drawings in which:

Figure 1 is a high-level diagram showing the interconnection of a CPU, a bus and an add-on memory card;

Figure 1A is a high level block diagram of the memory interface with a memory controller wherein ECC is on each DRAM CARD;

Figure 1B is a high level block diagram of the memory interface with a memory controller using a single ECC unit for all DRAM cards;

Figure 2 is a flow diagram showing the operation of the error correction system for add-on memory according to the preferred embodiment of this invention.

The preferred embodiment will be described in the environment of an IBM Personal Computer using an Intel 80386 or 80486 microprocessor and with DRAM cards or single in-line memory modules (SIMMs) provided as add-on memory. For the purpose of this description, the system will be described as it is used with a CPU capable of generating parity bits for the bytes of information that it writes and also reading and comparing parity information read from storage. The CPU and its associated system will not have error correction code logic, although the invention can be used with such systems. In the preferred embodiment, the address locations in add-on memory are assumed to be 40 bits wide and the data words are written as 4 byte strings with 7 check bits generated thus accounting for 39 of the possible 40 bits in each address. Such a system is conventional and need not be described further. In the preferred embodiment, the 40th bit is used as a flag bit for the syndrome decode as will be described later.

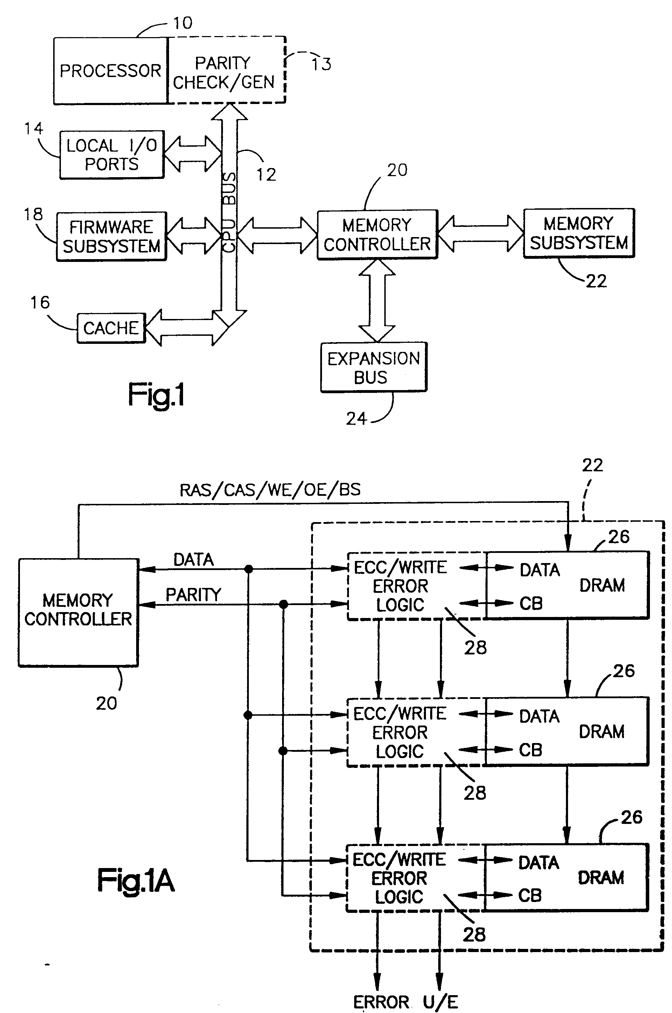

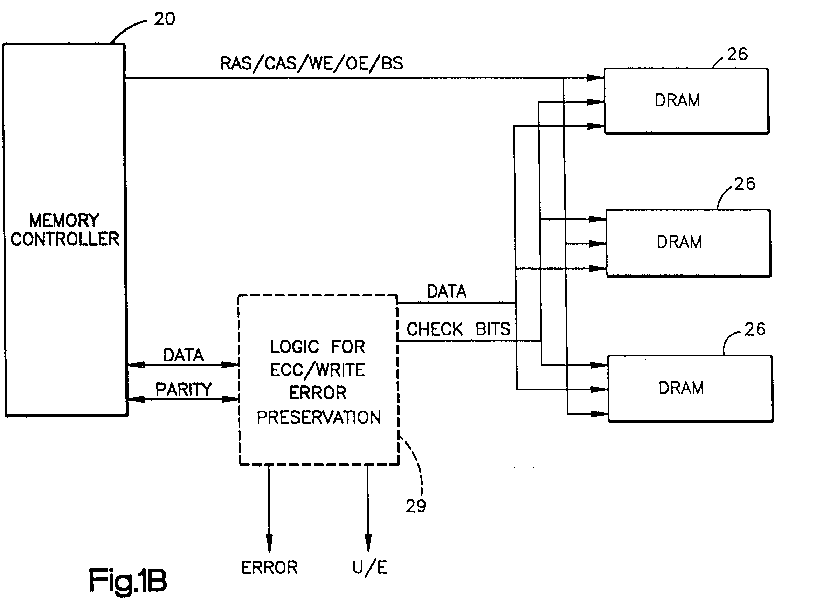

As can be seen in Figure 1, there is provided a CPU 10 which is connected to a CPU or system bus 12. A parity generation and check unit 13 is also provided which generates or checks parity of data being either written by or read by the CPU 10 to or from the bus 12. The CPU bus may also have local I/O ports 14, CACHE memory 16, and firmware subsystems 18 associated therewith. A memory controller 20 is also connected to the system bus 12, coupling it to a memory subsystem 22, and also normally to an expansion bus 24 if one is present. The memory subsystem 22 is typically comprised of SIMMs or a plurality of DRAMs 26, each of which is provided with error correction code logic (ECC) 28 of this invention as shown in Figure 1A. It should be noted that a single ECC unit 29 could be used for all DRAM cards as shown in Figure 1B. In either case, the ECC unit 28 or 29 operates the same.

As indicated above, the CPU 10 is capable of writing data onto the bus 12 which in turn will be conveyed to the correct memory address in subsystem 22 by the memory controller 20. Upon writing data by the CPU 10, parity bits are generated for each byte of information written to memory by the parity generating and checking device 13 which also checks parity on information read from the memory subsystem 22 during a read cycle to determine parity error. The memory controller also provides the necessary signals, such as Row Activation Strobe (RAS), Column Activation Strobe (CAS), Write Enable (WE), Output Enable (OE), and Byte Select (BS), etc. to the memory subsystem 22 as shown in Figures 1A and 1B. The memory controller reads and writes both data and parity to each of the DRAM cards 26, also as shown in Figures 1A and 1B.

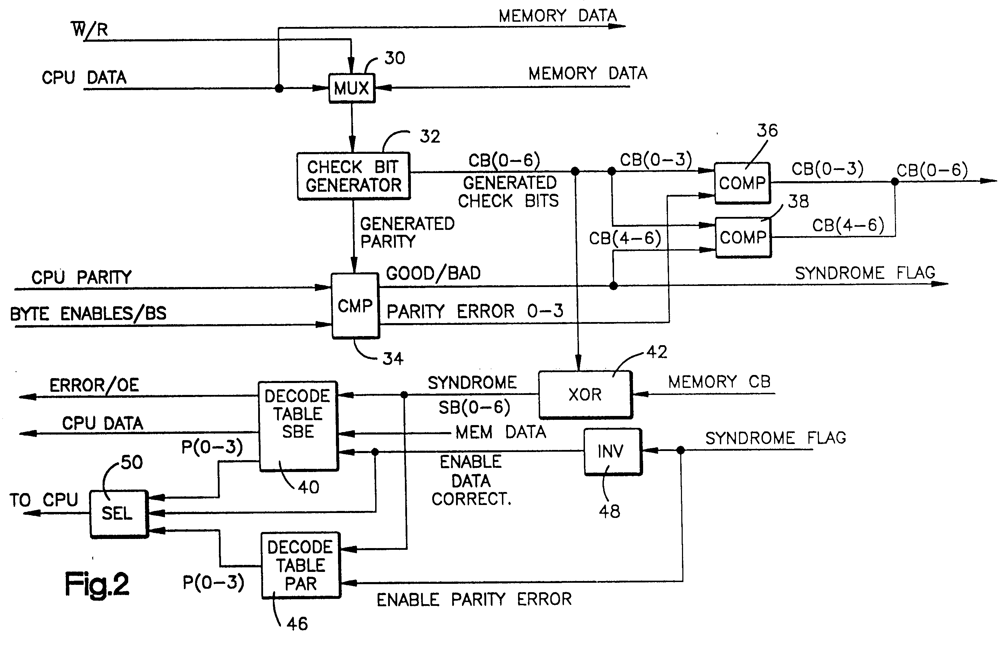

The error correction code logic includes logic which will store the parity bits written by the CPU on a "write" cycle. The logic will also regenerate parity bits for each byte written and then compare the originally supplied parity bits with the regenerated or recalculated parity bits to determine if there was a write error. The ECC logic will also set a flag which in the preferred embodiment is a particular logic state of the 40th bit in the data word if a write error has occurred. The ECC logic will also calculate 7 check bits for each data word. Each memory location in the card, which may extend to gigabyte depth, stores the 4 byte data word, the associated 7 check bits and the flag bit for each data word. The error correction code also can regenerate the check bits when the stored word and associated check bits are read from memory. If a single bit error occurs in the reading of the data, the ECC will correct this error before passing the data with good parity to the CPU on the CPU read cycle if the data stored was properly written and uncorrupted. If the data stored was corrupted or bad data, the logic will force a "bad" parity bit or "inverted" bit associated with any byte which showed a write error before it passes the bytes back to the CPU on a read cycle. This is shown in the flow chart in Figure 2.

The logic for the error correction code and the preservation and identification of write errors is accomplished as follows. The data flow to memory is shown in Figure 2 as being left-right as indicated by the arrows. During a write cycle the CPU writes data to memory through the memory controller 20 and also to a selector or multiplexer 30. The selector 30 is actuated by the W/R signal from the memory controller. A check bit generator 32 is connected to receive data from the selector 30. The check bit generator 32 generates check bits (CB) 0-6. Check bit generator 32 also generate four parity bits 0-3, one associated with each data byte. The parity bits generated by the check bit generator 32 are supplied to one port of a comparator 34. The CPU generated parity bits are supplied to another port of comparator 34. (It is immaterial whether the parity is "even" parity or "odd" parity. In the preferred embodiment, the parity is "odd".) The check bits are generated according to the pattern shown in Table I.

TABLE I

GENERATION OF CHECK BITS

| Generated Check Bits | Parity | Participating Data Bits | | | | | | | | | | | | | | | |
|---|---|---|---|---|---|---|---|---|---|---|---|---|---|---|---|---|---|
| | | 0 | 1 | 2 | 3 | 4 | 5 | 6 | 7 | 8 | 9 | 10 | 11 | 12 | 13 | 14 | 15 |
| CB0 | NOR | | X | | X | | | X | | | X | | X | | | X | |
| CB1 | NOR | X | X | X | X | X | X | X | X | | | | | | | | |
| CB2 | NOR | | | X | X | X | X | | | X | X | X | X | X | X | X | X |
| CB3 | NOR | X | X | X | | | | | X | | | X | X | X | X | | |
| CB4 | NOR | X | | | | X | | | | X | X | X | | | | | X |
| CB5 | NOR | | | | | | | | | X | | | | X | | | |
| CB6 | NOR | | | | | | X | X | X | | | | | | X | X | X |

| Generated Check Bits | Parity | Participating Data Bits | | | | | | | | | | | | | | | |
|---|---|---|---|---|---|---|---|---|---|---|---|---|---|---|---|---|---|
| | | 16 | 17 | 18 | 19 | 20 | 21 | 22 | 23 | 24 | 25 | 26 | 27 | 28 | 29 | 30 | 31 |
| CB0 | NOR | X | X | X | | | | | X | | | X | X | X | X | | |
| CB1 | NOR | X | | | | X | | | | X | X | X | | | | | X |
| CB2 | NOR | | | | | | | | | X | | | | X | | | |
| CB3 | NOR | | X | | X | | | X | | X | | X | | | X | | |
| CB4 | NOR | X | X | X | X | X | X | X | X | | | | | | | | |
| CB5 | NOR | | | X | X | X | X | | | X | X | X | X | X | X | X | X |
| CB6 | NOR | | | | | | X | X | X | | | | | | X | X | X |

In Table I the participating data bits are labelled from 0 to 31. The first 8 data bits are the data bits for the first byte, and the next 8 bits are the data bits for the second data byte, etc. The 7 check bits are generated by XNORing the participating data bits as indicated by the x's in the table. Each check bit is generated by using a unique pattern of data bits in the data word such that when the check bits are regenerated later and the regenerated check bits compared with the original check bits, a single bit error in any data bit or check bit will be identified uniquely as to its location. This type of error correction code per se is known in the art. It should be noted that in generating check bit 1 all of the bits of data byte 1, i.e. bits 0 through 7 are included, check bit 2 is generated by including all of the data bits in byte 2, i.e. bits 8 through 15, check bit 3 includes all of the eight data bits in byte 3, i.e. data bits 16 through 23, check bit 4 is generated including data bits 24 through 31. It will be apparent to one skilled in the art that using only these data bits which correspond to the data bits in each data word that a parity bit will be generated for each data word, i.e. that bits 0 through 7 forming check bit 1 constitute a parity bit for byte 1, that data bits 8 through 15 constitute a parity bit for byte 2, data bits 16 through 23 constitute a parity bit for the byte 3 and data bits 24 through 31 constitute a parity bit for the data byte 4.

The check bits 0-3 are gated through comparator 36 and check bits 4-6 are gated through comparator 38. The CPU bits and the generated parity bits are compared in comparator 34 and supplied to comparators 36 and 38. If a write error occurs, it will be written as parity error in check bits 0-3 and a syndrome flag which is the inversion of bit 40 will be set which will flag check bits 4-6 to identify write parity error. The technique to identify when the write error occurred will be described presently. If no write parity error is detected, this will also be reflected in the check bits by not inverting bit 40. The data written by the CPU and the check bits are stored together in memory at 40 bit wide addresses.

The data stored in memory together with the check bits and system flag are read from memory as shown in Figure 2 with the arrows flowing from right to left. The data from memory is read to the selector 30 and also to an error correcting syndrome decode table 40. The check bits in memory are read through XOR gate 42 to the error correcting syndrome decode table 40 and also to parity error reconstruction syndrome decode table 46. The read data is delivered from the selector 30 to the check bit generator 32. The check bit generator 32 delivers newly generated check bits to the XOR gate 42 which together with the check bits read from memory will provide syndrome bits S0-S6 to the error correcting syndrome decode table 40 and to parity error syndrome decode table 46. The syndrome flag is also delivered to the decode table 40 through inverter 48 if it is not flipped, and directly to decode table 46 if it is flipped, indicating a parity write error as well as to parity decode table 40.

If the data was not corrupted when written, the decode table 40 provides the function of error correction of single bit read errors and double bit detect errors in the following manner. The functioning of the data correcting syndrome decode table 40 is shown in Table II which is used to determine whether an error occurred in the read data word.

TABLE II

SYNDROME DECODE TABLE WITH FLAG NOT SET

| SYNDROME BITS | | | | S6=0 S5=0 S4=0 | S6=1 S5=0 S4=0 | S6=0 S5=1 S4=0 | S6=1 S5=1 S4=0 | S6=0 S5=0 S4=1 | S6=1 S5=0 S4=1 | S6=0 S5=1 S4=1 | S6=1 S5=1 S4=1 |
|---|---|---|---|---|---|---|---|---|---|---|---|
| S0 | S1 | S2 | S3 | | | | | | | | |
| 0 | 0 | 0 | 0 | * | CB6 | CB5 | | CB4 | | | 21 |
| 0 | 0 | 0 | 1 | CB3 | | | 30 | | 22 | 19 | |
| 0 | 0 | 1 | 0 | CB2 | | | | | 15 | 8 | |
| 0 | 0 | 1 | 1 | | 13 | 12 | | 10 | | | |
| 0 | 1 | 0 | 0 | CB1 | | | 31 | | | 20 | |
| 0 | 1 | 0 | 1 | | 7 | 25 | | 0 | | | |
| 0 | 1 | 1 | 0 | | 5 | 24 | | 4 | | | |
| 0 | 1 | 1 | 1 | 2 | | | | | | | |
| 1 | 0 | 0 | 0 | CB0 | | | 29 | | 23 | 18 | |
| 1 | 0 | 0 | 1 | | | 27 | | 17 | | | |
| 1 | 0 | 1 | 0 | | 14 | 28 | | 9 | | | |
| 1 | 0 | 1 | 1 | 11 | | | | | | | |
| 1 | 1 | 0 | 0 | | 6 | 26 | | 16 | | | |
| 1 | 1 | 0 | 1 | 1 | | | | | | | |
| 1 | 1 | 1 | 0 | 3 | | | | | | | |
| 1 | 1 | 1 | 1 | | | | | | | | |

* No error detected
Blanks in table indicate multiple errors

If no error occurred, all syndrome bits will be 0. If a single bit error in the data word is detected, the exact bit location will be identified and that bit reversed or "flipped" to correct the data and read the corrected data into the CPU as correct data from the decode table 40. How this is done is demonstrated in the syndrome Decode table shown in Figure 4. The syndrome decode table indicates that when the check bits are each exclusively OR'ed with each other, if all of them compare the syndrome bits will be all logic 0; this location is shown in the upper left hand corner of the table indicating that the data read is uncorrupted from that as written. Each place where there is an indication in the table represents the detection of a single bit error in one of the 4 bytes or one of the seven check bits. In any of these cases, this single bit error can be corrected and the correct data passed to the CPU on a read cycle. If, for example, data bit no. 1 were the corrupted bit, the corresponding syndrome bits S0, S1 and S3 would be logic "1", while syndrome bits S2, S4, S5 and S6 would be at logic 0. Thus, a reading of this code would indicate that data bit 1 had been corrupted and it is the only corrupted data bit. This data bit is changed either from "0" to "1" or "1" to "0", whichever it should be. This corrected code is transmitted to the CPU. Similarly, if check bit 4 is the bit that was corrupted, then syndrome bit S4 will be the only one that is a 1 and syndrome bits S0, S1, S2, S3, S5 and S6 would read 0, this code indicating that the check bit 4 was the one that is corrupted, and no correction of the data need occur since this is merely a check bit which will be discarded. Similarly, if syndrome bits S4, S5 and S6 do not compare and syndrome bits S0, S1, S2 and S3 do compare, this would represent data bit 21 as can be seen in the upper right hand corner of the table.

All of the blanks in the table, i.e., where there is neither an asterisk nor a bit location designated, represent a multiple bit error and in this case the information of multiple bit errors is delivered to selector 50 and passed on to the CPU indicating corrupted data since with this particular error correcting scheme no correction is possible for multiple bit errors. A decode to a non-zero syndrome that does not fall into an identified place in the table will identify all 2 bit errors and certain errors involving more than 2 bits. The data will be returned to the CPU indicating uncorrectable error (UE). It will be remembered that this discussion has related to the handling of data which did not have any "write" errors detected and thus the data stored is uncorrupted.

Turning now back to the case where a write error is detected, it will be remembered that the write error was detected by regenerating parity bits corresponding to the parity bits written by the CPU for the 4 bytes and comparing them. If any of the these compared bytes has a parity error detected, bit 40 which is a flag bit, is activated to a logic "1" as a flag and XOR gate 38 will flip bits 4, 5 and 6 to show bad parity check as will be described presently. The data bytes are then stored with the generated check bits, the check bits having been generated as shown in Table I. When the data is read by the CPU from the memory, the flipped 40 bit, i.e. the syndrome flag will enable parity error syndrome decode table 46 to identify the location of the write parity error. The byte location of the bad parity bit can be identified as shown in the last column in Table III which shows the functioning of parity error syndrome decode table 46.

TABLE III

SYNDROME DECODE TABLE WITH FLAG SET

| SYNDROME BITS | | | | S6 | 0 | 1 | 0 | 1 | 0 | 1 | 0 | 1 |
|---|---|---|---|---|---|---|---|---|---|---|---|---|
| | | | | S5 | 0 | 0 | 1 | 1 | 0 | 0 | 1 | 1 |
| | | | | S4 | 0 | 0 | 0 | 0 | 1 | 1 | 1 | 1 |
| S0 | S1 | S2 | S3 | | | | | | | | | |
| 0 | 0 | 0 | 0 | | * | CB6 | CB5 | | CB4 | | | 21 |
| 0 | 0 | 0 | 1 | | CB3 | | | 30 | | 22 | 19 | B3 |
| 0 | 0 | 1 | 0 | | CB2 | | | | | 15 | 8 | B2 |
| 0 | 0 | 1 | 1 | | | 13 | 12 | | 10 | | | B23 |
| 0 | 1 | 0 | 0 | | CB1 | | | 31 | | | 20 | B1 |
| 0 | 1 | 0 | 1 | | | 7 | 25 | | 0 | | | B13 |
| 0 | 1 | 1 | 0 | | | 5 | 24 | | 4 | | | B12 |
| 0 | 1 | 1 | 1 | | 2 | | | | | | | B123 |
| 1 | 0 | 0 | 0 | | CB0 | | | 29 | | 23 | 18 | B0 |
| 1 | 0 | 0 | 1 | | | | 27 | | 17 | | | B03 |
| 1 | 0 | 1 | 0 | | | 14 | 28 | | 9 | | | B02 |
| 1 | 0 | 1 | 1 | | 11 | | | | | | | B023 |
| 1 | 1 | 0 | 0 | | | 6 | 26 | | 16 | | | B01 |
| 1 | 1 | 0 | 1 | | 1 | | | | | | | B013 |
| 1 | 1 | 1 | 0 | | 3 | | | | | | | B012 |
| 1 | 1 | 1 | 1 | | | | | | | | | B0123 |

\* No error detected
Blanks in table indicate multiple errors

Table III is similar to Table II except the bottom 15 rows of column 8 are used to identify the byte in which the write error occurred. In this column it can be seen that any byte or any multiplicity of bytes which have bad parity, as written, are identified depending upon the condition of syndrome bits S0, S1, S2 and S3 since syndrome bits S4, S5 and S6 have all been flipped to logic "1" condition showing parity error. For example, if the error in write parity was in byte 3, the syndrome bit 3 would be a 1, and syndrome bits S0, S1 and S2 would all be 0's. Or, if an error in write parity occurred in each of bytes 1, 2 and 3, then syndrome bits S1, S2 and S3 would be 1's, syndrome bit S0 would be a 0 indicating bytes 1, 2 and 3 had bad parity. When the write errors

7

have been identified as to bytes, non-parity bits are written to correspond to the byte location of the error or errors. For example, if syndrome bit S3 is the only byte that had a non-parity or bad parity during write cycle then byte 3 would be given a bad parity bit appended thereto when read to the CPU. If bytes 1, 2 and 3 each had bad data generated during the write cycle, then bytes 1, 2 and 3 would be returned to the CPU with bad parity bits appended thereto. This allows the CPU to identify which bytes had been improperly written as corrupted data and take whatever action the CPU may be programmed to take upon receiving bad parity bits in a conventional manner.

Thus, it can be seen that error correction code can be utilized on an add-on card in a system wherein the CPU and its associated system are not equipped to handle error correction per se but merely equipped to write data with parity bits and read and compare data with parity bits.

## Claims

1. A memory subsystem for a computer system having a central processing unit (CPU) to which said memory subsystem is interconnectable via a system bus, said system being configured to write data to and read data from said memory as a plurality of data bytes constituting data words, and to generate parity bits associated with each of said bytes of data the CPU writes to memory and to read parity bits associated with data the CPU reads from the memory and to regenerate new parity bits and compare said new parity bits with said received parity bits to detect data errors on data read from the memory, the memory comprising:

   error correcting code logic to identify any byte having a single bit error in the data or its parity bit received from the CPU, and to correct all single bit errors on data read from the memory for transfer to the CPU;

   said error correcting code logic including:

   logic to generate parity bits from the data bytes received from said CPU and logic to compare the parity bits received from the CPU with said generated parity bits;

   logic to store said data bytes in a first format in said add-on memory when each newly generated parity bit compares with each corresponding originally written parity bit and in a second format when at least one newly generated parity bit does not compare with a corresponding originally written parity bit;

   logic to correct any single bit error in a data word when the data is read out of the memory for transfer to the CPU when the data bytes are stored in said first format; and

   logic to identify any byte on which the corresponding parity bits did not compare when the data bytes are read from memory when the data bytes are stored in said second format;

   whereby single bit write errors to memory are identified and single bit read errors from memory are corrected.

2. A memory subsystem as claimed in claim 1 further comprising:

   logic to generate a first condition flag if all parity bits compare and a second condition flag when one or more parity bits do not compare.

3. A memory subsystem as claimed in claim 1 or claim 2 wherein said logic to identify the bytes in which the write error occurred includes logic to force a non-parity bit associated with each byte in which a write error occurred in the data read from the memory to the CPU.

4. A memory subsystem as claimed in any preceding claim wherein said logic to correct all single bit errors in said data words include logic to indicate all two-bit errors in any data word.

5. A memory subsystem as claimed in claim 3 wherein said logic to correct all single bit errors includes logic to indicate some error of three or more bits in any data read to the CPU.

6. An information processing system comprising:

   a central processing unit (10, 13); and

   a memory subsystem as claimed in any of claims 1 to 5, interconnected to the central processing unit by means of a bus (12).

7. A method for performing error correction in an add-on memory subsystem for a computer system having a CPU complex, and a bus for interconnecting said CPU complex and said add-on memory, and wherein said CPU complex is configured to write data to and read data from said add-on memory as a plurality of data bytes constituting data words, and wherein said CPU complex is configured to generate parity bits associated with each byte of data it writes to add-on memory and read parity bits associated with each byte of data it reads from add-on memory, said add-on memory including error correcting code to identify the location by byte of errors in data to be written to said memory and correct at least all single bit errors in data read from said memory; the method comprising the steps of:

generating parity bits for each byte of data written by said CPU complex to said add-on memory;

comparing the parity bits generated by the CPU complex with the parity bits generated by said error correcting code;

generating a first condition flag if all parity bits compare and a second condition flag if one or more parity bits do not compare;

generating check bits from said data written by the CPU complex;

storing said written data and said generated check bits in either said first or said second condition in said add-on memory;

reading the data from add-on memory to the CPU means checking and correcting the read value of any single bit error in a data word when said data is stored in said first condition, and identifying the byte location in which any errors were detected in the written data when said data is stored in said second condition.

8. A method as claimed in claim 7 including the step of forcing a non-parity bit associated with each byte in which a write error occurred in the data read from the memory to the CPU.

9. A method as claimed in claim 7 or claim 8 including the step of identifying all two-bit errors in any data word.

10. A method as claimed in claim 9 including the step of identifying some errors of three or more bits in any data read to the CPU.

Fig.1

Fig.1A

RAS/CAS/WE/OE/BS

ERROR U/E

Fig.1B

EP 0 653 707 A2

Fig.2